# EUROPEAN PATENT APPLICATION

(11) **EP 4 560 114 A1**
(43) Date of publication of application: **28.05.2025**
(21) Application number: 24214908.6
(22) Date of filing: 22.11.2024
(51) Int. Cl.: F01D 11/00

(54) **PISTON RING SEAL**

(30) Priority: 22.11.2023 US 202318517615
(71) Applicant: RTX Corporation, Farmington, CT 06032 (US)
(72) Inventor: LAUREANO, Pedro D., Farmington, 06032 (US); WIRT, Matthew, Farmington, 06032 (US); PEZZETTI, JR, Michael C., Farmington, 06032 (US)
(74) Representative: Dehns

(57) **Abstract**

A piston ring seal arrangement of a gas turbine engine includes a piston ring (64) having a circumferentially split ring configuration having a first axially-facing side (72) and a second axially-facing side (70) opposite the first axially facing side (72). The piston ring (64) includes a first circumferential end (78) circumferentially overlapping a second circumferential end (80). The piston ring (64) is installed into a groove (66) in a mating component (62). The first circumferential end (78) and the second circumferential end (80) define a plurality of edges (90... 112) on the first axially-facing side (72) and the second axially-facing side (70). The first axially-facing side (72) includes fewer edges (90...112) than the second axially-facing side (70), and an operating pressure acting on the piston ring (64) is greater at the second axially-facing side (70) than at the first axially-facing side (72).

## Description

### TECHNICAL FIELD

Exemplary embodiments of the present disclosure pertain to the art of gas turbine engines, and in particular to piston ring seals utilized in gas turbine engines.

### BACKGROUND

Piston ring seals are utilized in certain locations in gas turbine engines to prevent undesired leakage of airflow into or out of the engine flowpath and/or other engine cavities. Pressure effects, thermo-mechanical deflections, and vibratory effects drive interactions between the piston ring seals and mating components axially and radially adjacent to the piston ring seals. In particular, edges of the piston ring seals contacting the mating parts and interacting therewith via the methods mentioned previously results in increased wear at the piston ring seal to mating part interface. This is exacerbated by the fact that the edges of the joint by design are located at the free ends of the seal, which respond more to vibrations and where the thermal expansion of the ring/mating parts is absorbed.

### BRIEF DESCRIPTION

In an aspect of the present invention, a piston ring seal arrangement of a gas turbine engine includes a piston ring having a circumferentially split ring configuration having a first axially-facing side and a second axially-facing side opposite the first axially facing side. The piston ring includes a first circumferential end circumferentially overlapping a second circumferential end. The piston ring is installed into a groove in a mating component. The first circumferential end and the second circumferential end define a plurality of edges on the first axially-facing side and the second axially-facing side. The first axially-facing side includes fewer edges than the second axially-facing side, and an operating pressure acting on the piston ring is greater at the second axially-facing side than at the first axially-facing side.

In an embodiment of the above, a first end pocket is formed in the first circumferential end, and a second end finger is formed in the second circumferential end and configured to be received in the first end pocket.

In an embodiment according to any of the previous embodiments, the first end pocket is defined at least in part by two or more of a first end circumferential surface, a first end axial surface and a first end radial surface.

In an embodiment according to any of the previous embodiments, the first end circumferential surface defines a circumferential length of the first end pocket, the first end axial surface defines an axial width of the first end pocket, and the first end radial surface defines a radial depth of the first end pocket.

In an embodiment according to any of the previous embodiments, the second end finger is defined at least in part by two or more of a second end radial surface defining a radial height of the second end finger, a second end axial surface defining an axial length of the second end finger, and a second end circumferential surface defining a circumferential length of the second end finger.

In an embodiment according to any of the previous embodiments, a convex radius is formed at at least one edge of the plurality of edges.

In an embodiment according to any of the previous embodiments, a convex radius is formed at two or more edges of the plurality of edges, and where the convex radius varies at the two or more edges.

In another aspect of the present invention, a gas turbine engine includes a combustor configured to combust a mixture of air and fuel, a turbine driven by combustion products flowed from the combustor, and at least one piston ring seal arrangement. The piston ring seal arrangement includes a piston ring having a circumferentially split ring configuration having a first axially-facing side and a second axially-facing side opposite the first axially facing side. The piston ring includes a first circumferential end circumferentially overlapping a second circumferential end. A mating component has a groove into which the piston ring is installed. The first circumferential end and the second circumferential end define a plurality of edges on the first axially-facing side and the second axially-facing side. The first axially-facing side includes fewer edges than the second axially-facing side, and an operating pressure acting on the piston ring is greater at the second axially-facing side than at the first axially-facing side.

In an embodiment of the above, a first end pocket is formed in the first circumferential end, and a second end finger is formed in the second circumferential end and configured to be received in the first end pocket.

In an embodiment according to any of the previous embodiments, the first end pocket is defined at least in part by two or more of a first end circumferential surface, a first end axial surface and a first end radial surface.

In an embodiment according to any of the previous embodiments, the first end circumferential surface defines a circumferential length of the first end pocket, the first end axial surface defines an axial width of the first end pocket, and the first end radial surface defines a radial depth of the first end pocket.

In an embodiment according to any of the previous embodiments, the second end finger is defined at least in part by two or more of a second end radial surface defining a radial height of the second end finger, a second end axial surface defining an axial length of the second end finger, and a second end circumferential surface defining a circumferential length of the second end finger.

In an embodiment according to any of the previous embodiments, a convex radius is formed at at least one edge of the plurality of edges.

In an embodiment according to any of the previous embodiments, a convex radius is formed at two or more edges of the plurality of edges, and where the convex radius varies at the two or more edges.

In an embodiment according to any of the previous embodiments, the piston ring is configured to seal between a casing element and a vane of the gas turbine engine.

In yet another aspect of the present invention, a vane and case element assembly of a gas turbine engine includes a vane, a case element positioned radially adjacent to the vane, and a piston ring seal positioned to seal between the vane and the case element. The piston ring seal includes a piston ring having a circumferentially split ring configuration having a first axially-facing side and a second axially-facing side opposite the first axially facing side. The piston ring includes a first circumferential end circumferentially overlapping a second circumferential end. The piston ring is installed into a case element groove in the case element. The first circumferential end and the second circumferential end define a plurality of edges on the first axially-facing side and the second axially-facing side, and the first axially-facing side includes fewer edges than the second axially-facing side. An operating pressure acting on the piston ring is greater at the second axially-facing side than at the first axially-facing side.

In an embodiment of the above, a first end pocket is formed in the first circumferential end, and a second end finger is formed in the second circumferential end and configured to be received in the first end pocket.

In an embodiment according to any of the previous embodiments, the first end pocket is defined at least in part by two or more of a first end circumferential surface, a first end axial surface and a first end radial surface.

In an embodiment according to any of the previous embodiments, a convex radius is formed at at least one edge of the plurality of edges.

In an embodiment according to any of the previous embodiments, a convex radius is formed at two or more edges of the plurality of edges, and where the convex radius varies at the two or more edges.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a partial cross-sectional view of a vane and case arrangement having a piston ring seal;
FIG. 3 is a perspective view of an exemplary embodiment of a piston ring seal;
FIG. 4 is a first partial view of an exemplary end portion of a piston ring seal;
FIG. 5 is a second partial view of an exemplary end portion of a piston ring seal; and
FIG. 6 is a schematic illustration of an exemplary configuration of convex radiuses applied to edges of an embodiment of a piston ring.

### DETAILED DESCRIPTION

A detailed description of one or more embodiments of the disclosed apparatus and method are presented herein by way of exemplification and not limitation with reference to the Figures.

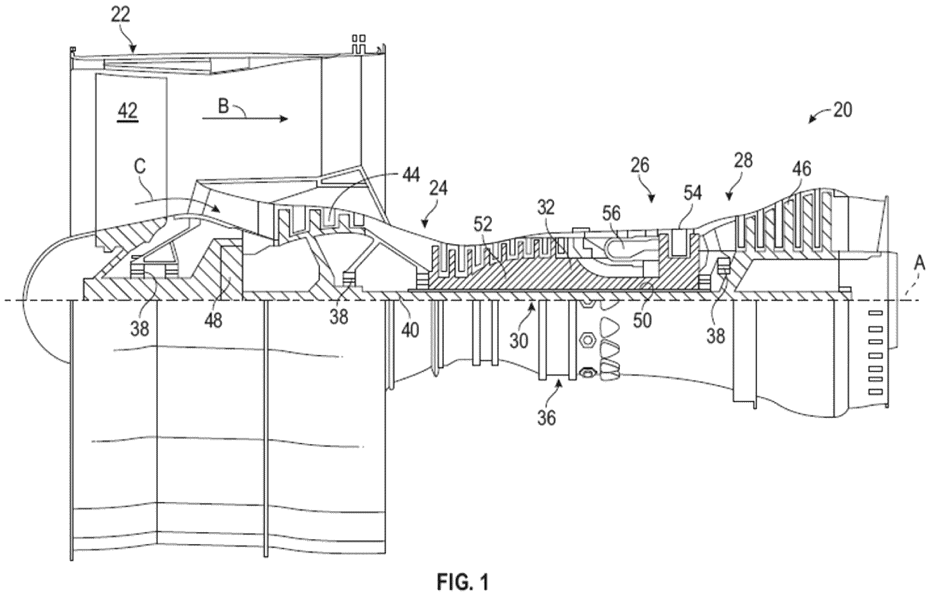

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3: 1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

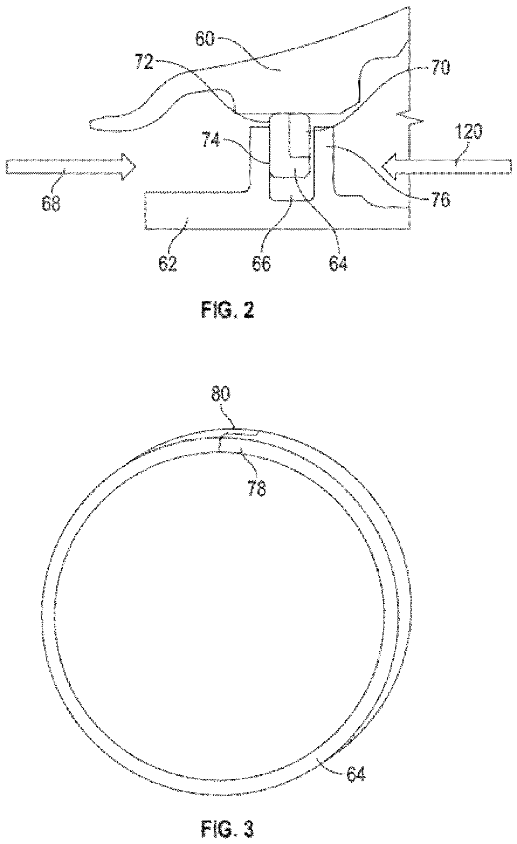

Certain locations in the engine 20 may utilize piston ring seals to prevent leakage into or out of the core airflow flowpath and/or along the bypass airflow flowpath. One exemplary location is illustrated in FIG. 2. The FIG. illustrates a vane, for example, a turbine vane 60 interface to a case element 62, with a piston ring 64 positioned in a case groove 66 of the case element 62 and interfacing with the turbine vane 60 to seal between the turbine vane 60 and the case element 62. In the configuration of FIG. 2, flow direction of the airflow along the flowpath is illustrated as 68, with higher cavity pressure 120 at a downstream side 70 of the piston ring 64 and in the case groove 66 than at an upstream side 72 of the piston ring 64. This pressure difference urges the piston ring 64 into axial contact with an upstream groove face 74 of the case groove 66 and in some embodiments results in a gap between the piston ring 64 and a downstream groove face 76 opposite the upstream groove face 74. The piston ring 64 is further urged in a radial direction into contact with the turbine stator vane 60 to seal to the turbine stator vane 60.

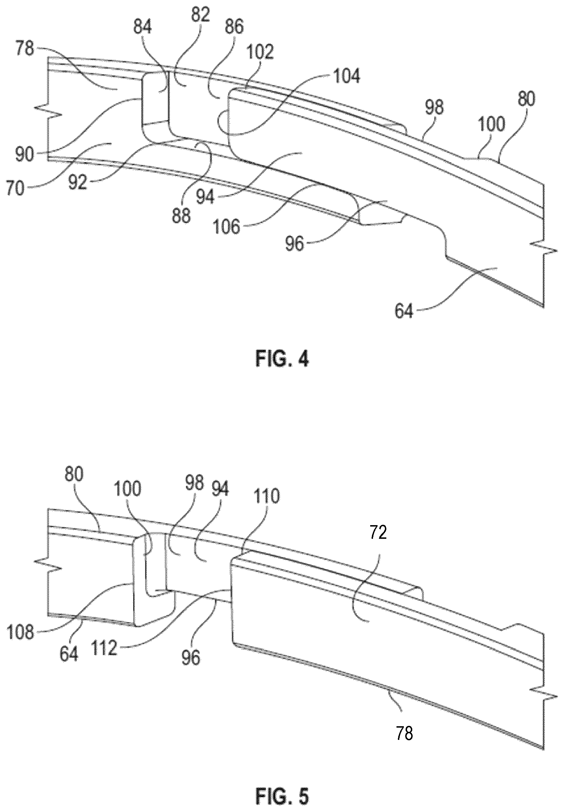

Referring now to FIG. 3, the piston ring 64 is configured as a split ring having a first circumferential end 78 and a second circumferential end 80. In some embodiments, the piston ring 64 has a rectangular cross-section. The first circumferential end 78 circumferentially overlaps the second circumferential end 80 to define the closed loop piston ring 64. Referring now to FIG. 4 and 5, the arrangement of the first circumferential end 78 and the second circumferential end 80 will be described further. The downstream side 70 of the piston ring 64 is illustrated in FIG. 4, while the upstream side 72 of the piston ring 64 is illustrated in FIG. 5.

The first circumferential end 78 includes a first end pocket 82 defined as an axial and circumferential recess in the first circumferential end 78. The first end pocket 82 is at least partially defined by a first end circumferential surface 84, a first end axial surface 86 and a first end radial surface 88, where the first end circumferential surface 84 defines a circumferential length of the first end pocket 82, the first end axial surface 86 defines an axial width of the first end pocket 82, and the first end radial surface 88 defines a radial depth of the first end pocket 82. An intersection of the downstream side 70 and the first end circumferential surface 84 defines a first end circumferential edge 90, and an intersection of the downstream side 70 and the first end radial surface 88 defines a first end radial edge 92.

The second circumferential end 80 includes a second end finger 94 sized and configured to be received in the first end pocket 82. The second end finger 94 is defined at least in part by the downstream side 70, a second end radial surface 96 defining a radial height of the second end finger 94, a second end axial surface 98 defining an axial length of the second end finger 94, and a second end circumferential surface 100 defining a circumferential length of the second end finger 94. An intersection of the downstream side 70 and a second circumferential end tip 102 defines a second end tip edge 104, and an intersection of the second end radial surface 96 and the downstream side 70 define a second end radial edge 106. In some embodiments, the second end tip edge 104 is circumferentially spaced apart from the first end circumferential edge 90.

As illustrated in FIG. 5, the upstream side 72 includes a second circumferential edge 108 defined by an intersection of the upstream side 72 and the second end circumferential surface 100. Further, an intersection of a first circumferential end tip 110 and the upstream side 72 defines a first end tip edge 112. In some embodiments, the second circumferential edge 108 is circumferentially spaced apart from the first end tip edge 112.

Referring again to FIG. 2, with continued reference to FIGS. 4 and 5, orienting the piston ring 64 with the downstream side 70 located at the relatively high pressure side of the seal arrangement, urges the upstream side 72 against the upstream groove face 74. This orientation of the piston ring 64 is advantageous at least because there are fewer edges urged into contact with the upstream groove face 74, thus reducing wear at the interface of the piston ring 64 to the upstream groove face 74, when compared to configurations where the downstream side 70 is urged into contact with the upstream groove face 74.

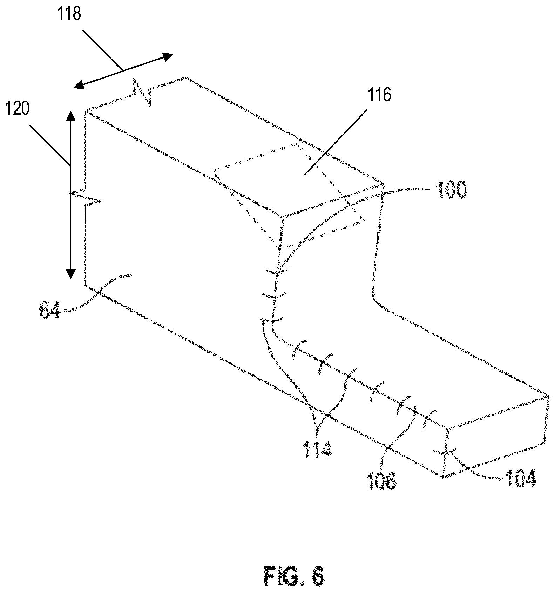

Referring now to FIG. 6, in some embodiments one or more of the edges 90, 92, 104, 106, 108, 112 described herein are crowned, or have a convex radius 114 applied thereto. The convex radius 114 may be the same for each of the edges 90, 92, 104, 106, 108, 112, or may vary depending on location of the edges on the piston ring 64. The convex radius 114 is applied to one or more of the edges 90, 92, 104, 106, 108, 112 to reduce contact and thereby reduce wear at the interface of the piston ring 64 to the case groove 66. Additionally or alternatively, surface 116 may include a chamfer as illustrated or alternatively a convex radius 114. In some embodiments, the radius 114 may be sized relative to a ring width 118 or a ring height 120. For example, in some embodiments the radius 114 is in the range of 0.3 - 0.5 times the ring width 118 or is in the range of 0.1 - 0.3 of the ring height 120.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A piston ring seal arrangement of a gas turbine engine, comprising:
a piston ring (64) having a circumferentially split ring configuration having a first axially-facing side (72) and a second axially-facing side (74) opposite the first axially facing side (72), the piston ring (64) including a first circumferential end (78) circumferentially over lapping a second circumferential end (80);
a mating component (62) having a groove (66) into which the piston ring (64) is installed;
wherein the first circumferential end (78) and the second circumferential end (80) define a plurality of edges (90, 92, 104, 106, 108, 112) on the first axially-facing side (72) and the second axially-facing side (74); and
wherein the first axially-facing side (72) includes fewer edges (90..112) than the second axially-facing side (74); and
wherein an operating pressure acting on the piston ring (64) is greater at the second axially-facing side (74) than at the first axially-facing side (72).

2. The piston ring seal arrangement of claim 1, further comprising:
a first end pocket (82) formed in the first circumferential end (78); and
a second end finger (94) formed in the second circumferential end (80) and configured to be received in the first end pocket (82).

3. The piston ring seal arrangement of claim 2, wherein the first end pocket (82) is defined at least in part by two or more of a first end circumferential surface (84), a first end axial surface (86) and a first end radial surface (88).

4. The piston ring seal arrangement of claim 3, wherein the first end circumferential surface (84) defines a circumferential length of the first end pocket (82), the first end axial surface (86) defines an axial width of the first end pocket (82), and the first end radial surface (88) defines a radial depth of the first end pocket (82).

5. The piston ring seal arrangement of any of claims 2 to 4, wherein the second end finger (94) is defined at least in part by two or more of a second end radial surface (96) defining a radial height of the second end finger (94), a second end axial surface defining an axial length of the second end finger (94), and a second end circumferential surface (100) defining a circumferential length of the second end finger (94).

6. The piston ring seal arrangement of any preceding claim, further comprising a convex radius (114) formed at at least one edge (90..112) of the plurality of edges (90..112).

7. The piston ring seal arrangement of claim 6, wherein a convex radius (114) is formed at two or more edges (90..112) of the plurality of edges (90..112), and where the convex radius (114) varies at the two or more edges (90..112).

8. A gas turbine engine, comprising:
a combustor (56) configured to combust a mixture of air and fuel;
a turbine (46, 54) driven by combustion products flowed from the combustor (56); and
the piston ring seal arrangement of any preceding claim.

9. The gas turbine engine of claim 8, wherein the piston ring (64) is configured to seal between a casing element (62) and a vane (60) of the gas turbine engine (20).

10. A vane and case element assembly of a gas turbine engine, comprising:
a vane (60);
a case element (62) disposed radially adjacent to the vane (60); and
a piston ring seal disposed to seal between the vane (60) and the case element (62), the piston ring seal including:
a piston ring (64) having a circumferentially split ring configuration having a first axially-facing side (72) and a second axially-facing side (74) opposite the first axially facing side (72), the piston ring (64) including a first circumferential end (78) circumferentially overlapping a second circumferential end (80);
wherein the piston ring (64) is installed into a case element groove (66) in the case element (62);
wherein the first circumferential end (78) and the second circumferential end (80) define a plurality of edges (90...112) on the first axially-facing side (72) and the second axially-facing side (74);
wherein the first axially-facing side (72) includes fewer edges (90...112) than the second axially-facing side (74); and
wherein an operating pressure acting on the piston ring (64) is greater at the second axially-facing side (74) than at the first axially-facing side (72).

11. The vane and case assembly of claim 10, further comprising:
a first end pocket (82) formed in the first circumferential end (78); and
a second end finger (94) formed in the second circumferential end (80) and configured to be received in the first end pocket (82).

12. The vane and case assembly of claim 11, wherein the first end pocket (82) is defined at least in part by two or more of a first end circumferential surface (84), a first end axial surface (86) and a first end radial surface (88).

13. The vane and case assembly of any of claims 10 to 12, further comprising a convex radius (114) formed at at least one edge (90...112) of the plurality of edges (90...112).

14. The vane and case assembly of claim 13, wherein a convex radius (114) is formed at two or more edges (90... 112) of the plurality of edges (90...112), and where the convex radius (114) varies at the two or more edges (90...112).
